# EUROPÄISCHE PATENTSCHRIFT

(11) **EP 1 322 480 B1**
(45) Veröffentlichungstag und Bekanntmachung des Hinweises auf die Patenterteilung: **02.11.2006**
(21) Anmeldenummer: 01966934.0
(22) Anmeldetag: 26.09.2001
(51) Int. Cl.: B42D 15/10

(54) **AUFZEICHNUNGSTRÄGER**
RECORDING MEDIUM
SUPPORT D'ENREGISTREMENT

(30) Priorität: 05.10.2000 CH 196200
(43) Veröffentlichungstag der Anmeldung: 02.07.2003
(73) Patentinhaber: Trüb AG, CH-5001 Aarau (CH)
(72) Erfinder: POT, Stephane, CH-5722 Gränichen (CH); HOFSTETTER, Stephan, D., CH-5015 Niedererlinsbach (CH); SIEGFRIED, Christof, CH-5035 Unterentfelden (CH); CHRISTEN, Paul, CH-5000 Aarau (CH)
(74) Vertreter: Isler, Fritz
(86) Internationale Anmeldenummer: PCT/CH2001/000579
(87) Internationale Veröffentlichungsnummer: WO 2003/022598

(56) Entgegenhaltungen:
- WO-A-96/15912
- DE-A- 3 634 865

## Beschreibung

Die Erfindung betrifft einen Aufzeichnungsträger, insbesondere Kredit- oder Ausweiskarte, mit einer oberen Schicht sowie weiteren Schichten wobei die genannte obere Schicht auf ihrer Aussenseite eine Mehrzahl von Lentikularlinsen und rückseitig ein Darstellungselement aufweist, das bei einem Kippen des Aufzeichnungsträgers um wenigstens eine Achse beweglich erscheint und wobei sich die Lentikularlinsen über lediglich einen Teilbereich der genannten Aussenseite erstrecken und das Darstellungselement ein Sicherheitselement ist, das auf einer inneren Kartenschicht aufgedruckt ist.

Ein Aufzeichnungsträger der genannten Art ist aus der DE 3634 865 A1 bekannt geworden. Als Material für die transparente und mit dem Linsenraster versehene obere Schicht wird handelsübliche PVC-Folie vorgeschlagen. Die WO 96/1592 offenbart einen Datenträger, bei dem ein Element mit Linsenstruktur in eine Öffnung der oberen Schicht eingeklebt wird. Das Element ist aus einem besonders elastischen und leicht verformbaren Material vorgesehen.

Aufzeichnungsträger dieser Art sind seit langem bekannt. Kredit- und Ausweiskarten und insbesondere staatliche Identitätskarten unterliegen der Gefahr, durch Betrüger gefälscht zu werden, wobei auch technisch fortschrittliche Geräte Verwendung finden. Solche Karten müssen deshalb gegen ein Fälschen gesichert werden. Dies erfolgt insbesondere mit Sicherheitselementen, die auf dem Aufzeichnungsträger aufgebracht sind und die auch mit hohem Aufwand kaum zu fälschen sind. Da sich aber die Fälschungsmethoden laufend verbessern, ist es notwendig, ständig neue Sicherheitsmerkmale zur Verfügung zu stellen, die das Fälschen zusätzlich erschweren. Diese Sicherheitsmerkmale müssen so ausgebildet sein, dass sie sich für die Serienproduktion eignen und die Anforderungen an die Gebrauchseigenschaften nicht beeinträchtigen. Im Stand der Technik sind bereits zahlreiche solche Sicherheitselemente bekannt. Diese sind beispielsweise Hologramme, Prägungen oder mit einem Laser bearbeitete Darstellungen. Zur Erhöhung der Sicherheit werden zudem Guillochen verwendet oder die Karten werden mit Materialien hergestellt, die nicht ohne weiteres zu beschaffen sind.

Der Erfindung liegt die Aufgabe zugrunde, einen Aufzeichnungsträger der genannten Art zu schaffen, der gegen ein Fälschen eine höhere Sicherheit aufweist und von den zuständigen Beamten (Zoll, Grenzkontrolle, Polizei) schnell und ohne Hilfsmittel kontrolliert werden kann. Die Aufgabe ist durch einen Aufzeichnungsträger gemäss Anspruch 1 gelöst.

Karten mit Lentikularlinsen aufweisende optische Systeme sind an sich bekannt. Diese Systeme wurden bisher jedoch lediglich zur Werbung, Unterhaltung und für Lehrmittel eingesetzt. Angewendet wurde damit ausschliesslich der visuelle Effekt, der mit solchen optischen Systemen erreichbar ist. Diese Karten wurden mit einer Lentikularfolie hergestellt. Die Lentikularlinsen erstrecken sich hierbei über die gesamte Oberseite der Karten. Beispielsweise zeigt die US-6,073,854 eine sogenannte Telefonkarte, die einen eingebauten Chip aufweist und deren Oberseite durch eine Lentikularfolie gebildet wird. Auf der Rückseite der Lentikularfolie ist ein Bild aufgedruckt und auf der Vorderseite dieser Folie befinden sich die Lentikularlinsen, die sich über die ganze Oberfläche der Karte erstrecken. Der mit solchen Lentikularlinsen erzielbare Effekt dient auch hier lediglich Werbe- bzw. Unterhaltungszwecken. Die US-6,016,225 offenbart einen Aufzeichnungsträger, der auf einem Magnetstreifen Informationen enthält und dessen Oberseite mit Lentikularlinsen versehen ist. Diese Linsen erstrecken sich hier ebenfalls über die gesamte Aussenseite und dienen der ästhetischen Ausgestaltung.

Die EP-A-0 219 012 und die EP-B-0 216 947 offenbaren Datenträger mit Lasergravuren, die mittels Lentikularlinsenfeldern hergestellt werden. Solche Lasergravuren können nicht mehrfarbig, sondern nur schwarz/weiss hergestellt werden.

Beim erfindungsgemässen Aufzeichnungsträger ist es wesentlich, dass lediglich ein Teilbereich der Aussenseite mit Lentikularlinsen versehen ist, und dass die Informationen in einer inneren Kartenschicht aufgedruckt und somit nicht mit Lasergravur nachträglich eingebracht wurden. Ausserhalb dieses Bereiches ist die Aussenseite wie an sich üblich ausgebildet und vorzugsweise sind hier weitere Sicherheitselemente, wie beispielsweise Hologramme vorgesehen. Wesentlich ist zudem, dass das Darstellungselement ein Sicherheitselement ist, das nur mit hohem Aufwand gefälscht werden könnte. Der hohe Sicherheitswert ergibt sich insbesondere auch darin, dass zur Herstellung des erfindungsgemässen Aufzeichnungsträgers nicht lediglich eine ohne weiteres erhältliche Lentikularfolie verwendet wird. Die oberste Schicht des Aufzeichnungsträgers, der lediglich bereichsweise mit Ventikularlinsen versehen ist, muss speziell und technisch vergleichsweise aufwendig hergestellt werden.

Weitere vorteilhafte Merkmale ergeben sich aus den abhängigen Patentansprüchen, der nachfolgenden Beschreibung und der Zeichnung.

Ein Ausführungsbeispiel der Erfindung wird nachfolgend anhand der Zeichnung näher erläutert. Es zeigen:
- Fig. 1: einen Schnitt durch einen erfindungsgemässen Aufzeichnungsträger,
- Fig. 2: einen Schnitt durch den erfindungsgemässen Aufzeichnungsträger entlang der Linie II - II der Fig. 1 und
- Fig. 3: eine Ansicht der Vorderseite des erfindungsgemässen Aufzeichnungsträgers.

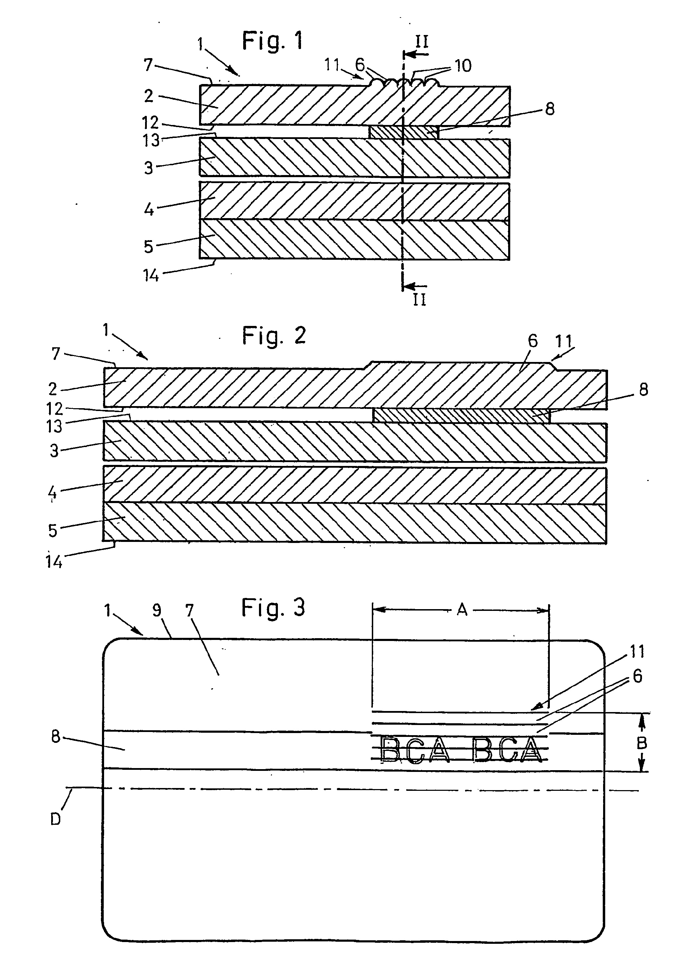

Der Aufzeichnungsträger 1 ist vorzugsweise eine Kredit- oder Ausweiskarte, insbesondere eine staatliche Identitätskarte oder eine Datapage in einem Reisepass und ist gemäss den Figuren 1 und 2 mehrschichtig aus den Schichten 2 - 5 aufgebaut. Diese Schichten 2 - 5 sind vorzugsweise durch Kunststofffolien gebildet und in an sich üblicher Weise miteinander verbunden, beispielsweise durch Heisslaminieren oder Verleimen.

Eine obere Schicht 2 besteht aus einer transparenten Kunststofffolie und bildet in einem vorbestimmten Teilbereich ein optisches System 11, das aus einer Vielzahl von Lentikularlinsen 6 sowie einem Sicherheitselement 8 besteht. Die Lentikularlinsen 6 sind wie ersichtlich auf der Aussenseite 7 der Schicht 2 angeordnet und sind im wesentlichen erhöhte Rippen, zwischen denen Rillen 10 verlaufen. Solche Lentikularlinsen 6 sind an sich bekannt. Zwischen der transparenten Schicht 2 und einer zweiten Schicht 3 befindet sich das Sicherungselement 8, das ein Darstellungselement ist, das beispielsweise als Sicherheits-Guilloche ausgebildet und auf der Rückseite 12 der Schicht 2 oder auf die Oberseite 13 der Schicht 3 aufgedruckt ist. Das Sicherheitselement 8 befindet sich wie ersichtlich im Abstand und unterhalb den Lentikularlinsen 6 und der Bereich des Sicherheitselementes 8 entspricht im wesentlichen dem Bereich der Lentikularlinsen 6. Ausserhalb der Lentikularlinsen 6 ist die Oberfläche 7 der Schicht 2 eben und glatt. In diesem Bereich kann eine hier nicht gezeigte Lackschicht aufgetragen sein.

Das optische System 11 ist wie erwähnt lediglich ein Teilbereich der Oberfläche 7 und dieser Bereich ist gemäss Fig. 3 beispielsweise streifenförmig mit einer Länge A von 3 cm und einer Breite von 1 cm. Die normierten und üblichen Masse des Aufzeichnungsträgers betragen 8,55 auf 5,4 cm.

Das Sicherheitselement 8 ist durch die Lentikularlinsen 6 sichtbar und je nach Darstellung als grafisches Element, beispielsweise als Buchstaben- oder Zahlenfolge oder auch als Bild erkennbar. Die Darstellung des Sicherheitselementes 8 ist so, dass diese nur mit hohem Aufwand nachmachbar wäre, wie dies beispielsweise bei Sicherheits-Guillochen der Fall ist. Die Wirkungsweise des optischen Systems 11 ist an sich bekannt. Zum Betrachten des Sicherheitselementes 8 wird der Aufzeichnungsträger 1 um die in Fig. 3 mit gestrichelter Linie angedeutete Achse D gekippt. Dadurch wird der Betrachtungswinkel zu den Lentikularlinsen 6 verändert und das Sicherheitselement 8 wird als sich bewegende Darstellung wahrgenommen. Die Achse D verläuft gemäss Fig. 3 in Längsrichtung des Aufzeichnungsträgers 1, es ist jedoch auch eine andere Ausrichtung, beispielsweise in diagonaler Richtung möglich.

Der Effekt des optischen Systems 11 kann in an sich bekannter Weise so ausgebildet sein, dass sich die Bewegung des Sicherheitselementes 8 als Regenbogen darstellt. Diese Wirkung ist auch als "Rainbow-Effekt" bekannt. Denkbar ist auch ein sogenannter "Flip-Effekt". Die Bewegung des Sicherheitselementes 8 stellt sich hierbei als abwechselnd sichtbares/unsichtbares Element dar. Denkbar ist auch eine Ausführung, bei welcher ein Text, beispielsweise Buchstaben BCA BCA gemäss Fig. 3 abwechselnd als negativer oder positiver Text erscheint.

Ausser den oben genannten Schichten 2 und 3 können noch weitere Schichten 4 und 5 vorgesehen sein, die ebenfalls Folien aus Kunststoff sind. Die Schichten 3 und 4 können hierbei opake Schichten sein. Die Schicht 5 ist vorzugsweise wieder transparent und bildet eine glatte Rückseite 14, auf die ein Lack aufgetragen sein kann. Die Schichten 2 - 5 sind aus Polycarbonat hergestellt. Polycarbonat eignet sich besonders für hochwertige Ausweiskarten und zeigt in hervorragender Weise den mit dem optischen System 11 angestrebten Effekt.

## Patentansprüche

1. Aufzeichnungsträger, insbesondere Kredit- oder Ausweiskarte, mit einer oberen Schicht (2) sowie weiteren Schichten (3, 4, 5), wobei auf ihrer Aussenseite (7) eine Mehrzahl von Lentikularlinsen (6) und rückseitig ein Darstellungselement (8) aufweist, das beim Kippen des Aufzeichnungsträgers um wenigstens eine Achse (D) beweglich erscheint und wobei sich die Lentikularlinsen (6) über lediglich einen Teilbereich der genannten Aussenseite (7) erstrecken und das Darstellungselement (8) ein Sicherheitselement ist, das auf einer inneren Kartenschicht aufgedruckt ist, **dadurch gekennzeichnet, dass** die obere Schicht (2) mit den auf dieser angeordneten Lentikularlinsen (6) sowie die übrigen Schichten (3, 4, 5) des Aufzeichnungsträgers aus Polycarbonat hergestellt sind.

2. Aufzeichnungsträger nach Anspruch 1, **dadurch gekennzeichnet, dass** das Sicherheitselement (8) eine Sicherheits-Guilloche ist.

3. Aufzeichnungsträger nach Anspruch 1 oder 2, **dadurch gekennzeichnet, dass** die bewegliche Achse (D) quer oder diagonal verläuft.

4. Aufzeichnungsträger nach einem der Ansprüche 1 bis 3, **dadurch gekennzeichnet, dass** die Lentikularlinsen (6) und das Sicherheitselement (8) ein optisches System (11) bildet, das den sogenannten "Rainbow-Effekt" oder "Flip-Effekt" ergibt.

5. Aufzeichnungsträger nach einem der Ansprüche 1 bis 3, **dadurch gekennzeichnet, dass** sich das Sicherheitselement (8) beim Kippen um die Achse (D) abwechselnd als sichtbares bzw. unsichtbares Element darstellt.

## Claims

1. A recording carrier, in particular a credit or ID card, with an upper layer (2), which has on its outer side (7) a plurality of lenticular lenses (6) and on its rear side a representational element (8), which movably appears when the recording carrier is tilted about at least one axis (D), wherein the lenticular lenses (6) extend only over a partial region of said outer side (7) and the representational element (8) is a security element which is printed on an inner card layer, **characterized in that** the upper layer (2) with the lenticular lenses (6) arranged on this layer and the other layers (3, 4, 5) of the recording carrier are produced from polycarbonate.

2. The recording carrier as claimed in claim 1, **characterized in that** the security element (8) is a security guilloche.

3. The recording carrier as claimed in claim 1 or 2, **characterized in that** the movable axis (D) runs transversely or diagonally.

4. The recording carrier as claimed in one of claims 1 to 3, **characterized in that** the lenticular lenses (6) and the security element (8) form an optical system (11), which produces the so-called "rainbow effect" or "flip effect".

5. The recording carrier as claimed in one of claims 1 to 3, **characterized in that** the security element (8) is alternately manifested as a visible or invisible element when tilting occurs about the axis (D).

## Revendications

1. Support d'enregistrement, en particulier carte de crédit ou d'accréditation, qui présente une couche supérieure (2) ainsi que d'autres couches (3, 4, 5) et dont le côté extérieur (7) présente une pluralité de lentilles lenticulaires (6) et le côté arrière un élément de présentation (8) qui, lorsque le support d'enregistrement est tourné autour d'au moins un axe (D), a un aspect mobile, les lentilles lenticulaires (6) s'étendant uniquement sur une partie dudit côté extérieur (7) et l'élément de présentation (8) étant un élément de sécurité qui est imprimé sur une couche intérieure de la carte, **caractérisé en ce que** la couche supérieure (2) sur laquelle sont disposées les lentilles lenticulaires (6) ainsi que les autres couches (3, 4, 5) du support d'enregistrement sont réalisées en polycarbonate.

2. Support d'enregistrement selon la revendication 1, **caractérisé en ce que** l'élément de sécurité (8) est un guillochage de sécurité.

3. Support d'enregistrement selon les revendications 1 ou 2, **caractérisé en ce que** l'axe mobile (D) s'étend transversalement ou en diagonale.

4. Support d'enregistrement selon l'une des revendications 1 à 3, **caractérisé en ce que** les lentilles lenticulaires (6) et l'élément de sécurité (8) forment un système optique (11) qui donne l'effet dit "d'arc-en-ciel" ou l'effet dit de "basculement".

5. Support d'enregistrement selon l'une des revendications 1 à 3, **caractérisé en ce que** l'élément de sécurité (8) se présente en alternance comme élément visible et comme élément invisible lors du basculement autour de l'axe (D).
